# EUROPEAN PATENT APPLICATION

(11) **EP 2 505 571 A2**
(43) Date of publication of application: **03.10.2012**
(21) Application number: 12159150.7
(22) Date of filing: 13.03.2012
(51) Int. Cl.: C04B 35/565, C04B 38/00, C04B 35/573

(54) **Honeycomb structure, Si-SiC based composite material, method for manufacturing honeycomb structure, and method for manufacturing Si-SiC based composite material**

(30) Priority: 28.03.2011 JP 2011069938; 09.03.2012 JP 2012053090
(71) Applicant: NGK Insulators, Ltd., Nagoya-shi, Aichi 467-8530 (JP)
(72) Inventor: Furukawa, Masahiro, Nagoya-shi, Aichi 467-8530 (JP); Shinshi, Mariko, Nagoya-shi, Aichi 467-8530 (JP); Matsuda, Mazuyuki, Nagoya-shi, Aichi 467-8530 (JP)
(74) Representative: Paget, Hugh Charles Edward

(57) **Abstract**

A honeycomb structure 20 is provided with a partition portion 22 constituting a plurality of cells 23 serving as flow paths of a fluid. This honeycomb structure 20 includes electrode portions 32 which are disposed as parts of the partition portion 22 and which have a SiC phase, an oxide phase containing a Si oxide, an Al oxide, and an alkaline-earth metal oxide, and a metal phase containing metal Si and metal Al, where the proportion of metal Al relative to the total amount of metal Si and metal Al is 0.001 percent by mole or more and 20 percent by mole or less and a heat generation portion 34 which is a part of the partition portion 22 and which has a volume resistivity higher than that of the electrode portion 32. This honeycomb structure is obtained by forming an impregnation base material containing metal Si and metal Al and an alkaline-earth metal compound on a part of the surface of a honeycomb base material having a SiC phase and an oxide phase containing a Si oxide and impregnating metal Si and metal Al into pores of the honeycomb base material through heating in an inert gas atmosphere.

## Description

### Technical Field

The present invention relates to a honeycomb structure, a Si-SiC based composite material, a method for manufacturing a honeycomb structure, and a method for manufacturing a Si-SiC based composite material.

### Background Art

Hitherto, as for honeycomb structures, the structures carrying catalysts to remove hazardous substances, e.g., nitrogen oxides, carbon monoxide, and hydrocarbons, contained in exhaust gases have been known. Regarding such structures, in the case where the temperature of an exhaust gas is low, hazardous substances may not be removed sufficiently. Then, a structure has been proposed, wherein the performance of exhaust gas cleaning is enhanced by heating a honeycomb structure, so as to raise the temperature of the exhaust gas passing through the honeycomb structure. For example, Patent literature 1 proposes a honeycomb body for energization heat generation, wherein heat generation is controlled by controlling a current flow in energization of a partition. The honeycomb body for energization heat generation is provided with electrode portions having a low volume resistivity and a heat generation portion having a high volume resistivity, the electrode portions are disposed all over both end surfaces, the volume resistivity of the heat generation portion is 0.1 to 10 Ωcm, the volume resistivity of the electrode portion is less than or equal to one-tenth the volume resistivity of the heat generation portion, and at least the heat generation portion is formed from a composite material of metal and ceramic.

### Citation List

Japanese Unexamined Patent Application Publication No. 2010-229976

### Disclosure of Invention

Meanwhile, regarding the honeycomb body in Patent literature 1, for example, metal Si is brought into contact with a Si-SiC based honeycomb body surface, and metal Si is melt-impregnated by heating under vacuum. The central portion not impregnated with metal Si is specified to be a heat generation portion and both end portions impregnated with metal Si is specified to be electrode portions. Regarding such a honeycomb body, in impregnation of metal Si, impregnation is sometimes insufficient under normal pressure which is a generally employed mass production condition. Furthermore, the difference in electrical resistance between the electrode portion and the heat generation portion may be insufficient by only impregnation of Si. Consequently, it has been desired that the electrode portions are formed more easily and the volume resistivity of the electrode portion is further decreased.

The present invention has been made in consideration of such problems, and regarding a Si-SiC based honeycomb structure, it is a main object to provide a honeycomb structure, a Si-SiC based composite material, a method for manufacturing a honeycomb structure, and a method for manufacturing a Si-SiC based composite material, wherein electrode portions are formed more easily and the volume resistivity can be further decreased.

In order to achieve the above-described object, the present inventors performed intensive research and found that in melt-impregnation of an impregnation material containing metal Si into a Si-SiC based honeycomb base material, impregnation was able to be performed at normal pressure and the volume resistivity was able to be decreased by adding metal Al and an alkaline-earth metal compound to the impregnation material. Consequently, the present invention has been completed.

According to the present invention, a honeycomb structure provided with a partition portion constituting a plurality of cells serving as flow paths of a fluid, includes:
electrode portions which are disposed as parts of the partition portion and which have a SiC phase, an oxide phase containing a Si oxide, an Al oxide, and an alkaline-earth metal oxide, and a metal phase containing metal Si and metal Al, where the proportion of metal Al relative to the total amount of metal Si and metal Al is 0.001 percent by mole or more and 20 percent by mole or less; and
a heat generation portion which is a part of the partition portion and which has a volume resistivity higher than that of the electrode portion.

A Si-SiC based composite material according to the present invention includes:
a SiC phase;
an oxide phase containing a Si oxide, an Al oxide, and an alkaline-earth metal oxide; and
a metal phase containing metal Si and metal Al, where the proportion of metal Al relative to the total amount of metal Si and metal Al is 0.001 percent by mole or more and 20 percent by mole or less.

A method for manufacturing a honeycomb structure according to the present invention includes the steps of:
forming an impregnation base material containing metal Si and metal Al and an alkaline-earth metal compound on a part of a surface of a honeycomb base material which is provided with a partition portion constituting a plurality of cells serving as flow paths of a fluid and which has a SiC phase and an oxide phase containing a Si oxide; and
impregnating metal Si and metal Al, which are contained in the resulting impregnation base material, into pores of the honeycomb base material by heating the honeycomb base material provided with the impregnation base material and
   the alkaline-earth metal compound in an inert gas atmosphere.

A method for manufacturing a Si-SiC based composite material according to the present invention includes the steps of:
forming an impregnation base material containing metal Si and metal Al and an alkaline-earth metal compound on the surface of a porous base material having a SiC phase and an oxide phase containing a Si oxide; and
impregnating metal Si and metal Al, which are contained in the resulting impregnation base material, into pores of the porous base material by heating the porous base material provided with the impregnation base material and the alkaline-earth metal compound in an inert gas atmosphere.

In the present invention, regarding a Si-SiC based honeycomb structure, electrode portions are formed more easily, and the volume resistivity can be further decreased. The reason for this is not certain, but it is estimated as described below. For example, it is believed that regarding an impregnation base material in which metal Al is added to metal Si, the eutectic point of the impregnation base material is lowered and, in addition, Si oxides on the SiC phase surface and the impregnation base material surface can be reduced as compared with those in the case where metal Al is not added, so as to improve the wettability between the SiC particle surface and the impregnation base material. Meanwhile, it is believed that regarding the impregnation base material in which an alkaline-earth metal compound is further added, Si oxides on the SiC phase surface and the impregnation base material surface are removed by, for example, lowering the eutectic point of the oxide phase and facilitating movement in melt-impregnation, so as to ensure good wettability between the SiC particle surface and the impregnation base material. Then, it is estimated that even in the case where a large extent of oxide phase is present in the base material, the impregnation base material containing metal Si can be impregnated at normal pressure by combining the two described above. Furthermore, it is estimated that metal Al is impregnated together with metal Si and, thereby, the volume resistivity of the electrode portion can be further decreased as compared with the case where only metal Si is impregnated.

Alternatively, a method for manufacturing a honeycomb structure according to the present invention comprises the steps of
removing an oxide phase contained in a honeycomb base material, which is provided with a partition portion
constituting a plurality of cells serving as flow paths of a fluid and which has a SiC phase and an oxide phase containing a Si oxide, by bringing an acidic solution into contact with a part of the honeycomb base material,
forming an impregnation base material containing metal Si and metal Al on the above-described honeycomb base material subjected to oxide phase removal, and
impregnating metal Si and metal Al, which are contained in the resulting impregnation base material described above, into pores of the above-described honeycomb base material by heating the above-described honeycomb base material provided with the impregnation base material in an inert gas atmosphere.

In this manufacturing method, instead of addition of the alkaline-earth metal compound to the impregnation base material, an oxide phase contained in the base material is removed in advance and, thereafter, the impregnation base material is formed. In this manner as well, the impregnation base material containing metal Si can be impregnated at normal pressure into the base material containing a SiC phase and an oxide phase containing a Si oxide. Moreover, the volume resistivity can be further decreased as compared with that in the case where only metal Si is impregnated. Meanwhile, regarding this manufacturing method, various aspects of the above-described honeycomb structure and the method for manufacturing the same may be adopted.

### Brief Description of Drawings

Fig. 1 is an explanatory diagram schematically showing an example of the configuration of a honeycomb structure 20;
Fig. 2 is an explanatory diagram showing an example of a formation step and an impregnation step;
Fig. 3 is an explanatory diagram showing an example of a formation step and an impregnation step;
Fig. 4 is an explanatory diagram schematically showing an example of the configuration of a honeycomb structure 20B;
Fig. 5 is an explanatory diagram schematically showing an example of the configuration of a honeycomb structure 20C;
Fig. 6 is an explanatory diagram collectively showing the test condition of each experimental example and observation results after an impregnation treatment;
Fig. 7 is a reflection electron image of a cross-section after an impregnation treatment;
Fig. 8 is a reflection electron image of a cross-section after an impregnation treatment;
Fig. 9 shows reflection electron images of a cross-section of a pellet base material before and after a hydrogen fluoride treatment.

### Description of Preferred Embodiments

Next, the embodiments to execute the present invention will be explained with reference to the drawings. A honeycomb structure according to the present invention is disposed in, for example, an exhaust pipe of an engine and serves as a catalyst carrier to carry a catalyst for cleaning an exhaust gas of an engine of an automobile.

### [First embodiment]

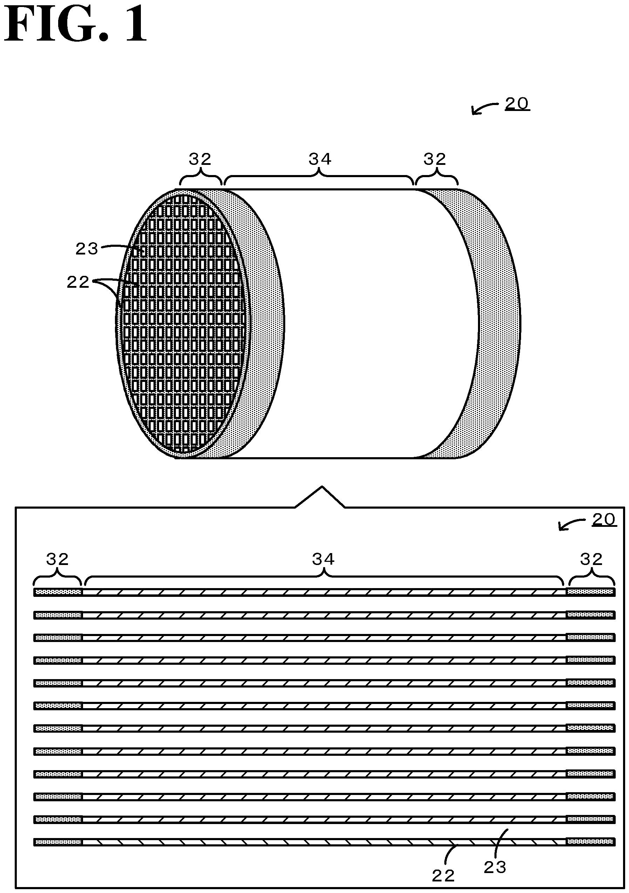

Fig. 1 is an explanatory diagram schematically showing an example of the configuration of a honeycomb structure 20 according to the present invention. As shown in Fig. 1, this honeycomb structure 20 is provided with a partition portion 22 constituting a plurality of cells 23 serving as flow paths of a fluid. This honeycomb structure 20 has a structure, in which both ends of the cell 23 are opened, and is provided with electrode portions 32 disposed as parts of the partition portion 22 and a heat generation portion 34 which is a part of the partition portion 22 and which has a volume resistivity higher than that of the electrode portion 32. Regarding this honeycomb structure 20, the partition portion 22 is formed and, thereafter, end portion regions thereof are subjected to a predetermined impregnation treatment, so as to convert parts of the partition portion 22 to electrode portions 32. Regarding this partition portion 22, the region not provided with the electrode portions 32 is the heat generation portion 34, and the electrode portions 32 and the heat generation portion 34 adjoin each other. When a voltage is applied between the electrode portions 32 of this honeycomb structure 20, the heat generation portion 34 generates heat through energization.

The outside shape of this honeycomb structure 20 is not specifically limited and, shapes, e.g., the shape of a circular cylinder, the shape of a quadrangular prism, the shape of an elliptic cylinder, and the shape of a hexagonal prism, can be employed. Meanwhile, as for the shape of a cross-section of the cell 23, the shapes of a quadrangle, a triangle, a hexagon, an octagon, a circle, an ellipse, and the like can be employed. Here, the case where the outside shape of the honeycomb structure 20 is formed into the shape of a circular cylinder and the cross-sectional shape of the cell 23 is formed into a quadrangle will be described mainly.

The electrode portions 32 are formed as parts of the partition portion 22 and the remainder of the partition portion 22 is configured to serve as the heat generation portion 34. The porosity of the partition portion 22 is preferably 20 percent by volume or more and 85 percent by volume or less, and more preferably 25 percent by volume or more and 50 percent by volume or less. Furthermore, the average pore diameter of the partition portion 22 is preferably within the range of 2 µm or more and 30 µm or less. Consequently, in formation of the electrode portions 32, the impregnation base material is impregnated into pores easily, and hazardous components contained in an exhaust gas can be removed sufficiently. This partition portion 22 is formed having a thickness, that is, a partition thickness, of preferably 20 µm or more and 300 µm or less, more preferably 30 µm or more and 200 µm or less, and further preferably 50 µm or more and 150 µm or less. In the case where the partition portion 22 is formed having such porosity, average pore diameter, and thickness, the exhaust gas comes into contact with the partition portion 22 easily, and hazardous components are removed easily. In this regard, the porosity and the average pore diameter of this partition portion 22 refer to the results measured by mercury porosimetry.

The heat generation portion 34 is formed as the partition portion 22 in itself and is provided with a SiC phase serving as an aggregate, an oxide phase containing a Si oxide, and a metal Si phase. The SiC phase serving as an aggregate of this heat generation portion 34 is the same as that in the electrode portions 32, the thermal expansion coefficient and the strength are close to those of the electrode portions 32 and, therefore, an occurrence of cracking between the electrode portions 32 and the heat generation portion 34 and the like can be suppressed. Moreover, the oxide phase is provided and, therefore, the corrosion resistance and the strength can be further enhanced. This heat generation portion 34 may be a plurality of regions, but is preferably one continuous region from the viewpoint of uniform heating of the whole honeycomb structure 20. In the heat generation portion 34, the ratio of the SiC phase to the oxide phase and the porosity are not specifically limited. Meanwhile, the heat generation portion 34 may contain metal Si, but it is preferable that the proportion of metal Si is lower than that in the electrode portions 32. Consequently, the volume resistivity is made larger than the volume resistivity of the electrode portions 32. In this regard, the volume resistivity is preferably 10 to 200 Ωcm from the viewpoint of practically efficient heat generation.

The electrode portions 32 are connected to a power supply and energize the heat generation portion 34. The connection method to the power supply is not specifically limited. A feeder or a feeding terminal connected to the power supply may be brazed or be mechanically connected by using a rivet or the like. It is enough that the electrode portion 32 is disposed as a part of the partition portion 22. The electrode portion 32 may be disposed at one place, or
the electrode portions 32 may be disposed at two or more places. In the case where the electrode portion 32 is disposed at one place, an external electrode is attached to the partition portion 22 excluding the electrode portion 32, and the partition portion 22 can be energized by the electrode portion 32 and the external electrode. The case where the electrode portions 32 are disposed at two or more places is preferable because the partition portion 22 can be energized by paired electrode portions 32. Alternatively, even in the case where the electrode portions 32 are disposed at two or more places, an external electrode may be attached to the partition portion 22 excluding the electrode portions 32, and the partition portion 22 may be energized by the electrode portions 32 and the external electrode. It is preferable that the electrode portions 32 are disposed at one end portion of the honeycomb structure 20 and the other end portion opposite thereto. In this regard, hereafter, such an aspect may also be referred to as "an aspect of deposition at opposite end portions". The feeder or the feeding terminal is attached easily and the electric power is fed from the power supply easily because of deposition at the end portion. Furthermore, in the case where the electrode portions 32 are disposed oppositely, the distribution of the amount of heat generation from the partition portion 22 in the region between the electrode portions can be made almost uniform. In particular, the electrode portions are disposed preferably in such a way that the opposite surfaces of the electrode portions 32 become parallel to each other because the length of the heat generation portion 34, that is, the resistance, can be made constant and, thereby, the distribution of the amount of heat generation from the heat generation portion 34 can be made more uniform.

In the present aspect, the electrode portions 32 are disposed at end portions oppositely and, as shown in Fig. 1, the electrode portions 32 are disposed at an upstream side end portion of the honeycomb structure 20 and a downstream side end portion. Such a case is preferable because a current passes along the partition portion 22 and, thereby, the amount of heat generation from the partition portion 22 can be made almost constant from the upstream side to the downstream side. It is preferable that this electrode portion 32 has a length of electrode portion 32 relative to the whole length of the honeycomb structure 20 in the direction of energization, that is, the length of the electrode portion 32 relative to the whole length of the honeycomb structure 20 in the flow path direction, of one-hundredth or more and one-fifth or less. If the length is one-hundredth or more, a sufficient conductive path can be ensured and, therefore, even when a large current is passed during energization heat generation, a potential difference in the electrode is not generated easily, so that the suitability for the electrode is enhanced. Furthermore, if the length is one-fifth or less, the heat generation portion 34 does not become too small. Meanwhile, in the use as a honeycomb structure to be mounted on a vehicle, a practical length of the electrode portion 32 in the flow path direction is preferably 1 mm or more and 50 mm or less, and more preferably 5 mm or more and 30 mm or less. In particular, it is preferable that the length in the flow path direction of the electrode portion 32 at the upstream side end portion is 5 mm or more. This is because, on the upstream side, erosion of the partition portion 22 due to an exhaust gas stream and the like occur easily and it is required that the thickness is sufficient for leaving the electrode even in this case. At this time, the electrode portions 32 may be disposed at a part of the upstream side end portion and a part of the downstream side end portion. According to this, for example, in the case where it is desired that only the inside circumference region is heated or in the case where it is desired that only the outside circumference region is heated, favorably, heating can be performed in a predetermined range. Meanwhile, the electrode portions 32 may be disposed at the whole upstream side end portion and the whole downstream side end portion. According to this, when rapid heating is required, for example, at starting of an engine, the whole honeycomb structure 20 can be heated efficiently and uniformly. In addition, a temperature difference is not generated easily, so that an occurrence of cracking can be further suppressed. Moreover, even when cracking or the like occurs between the electrode portions 32 and the heat generation portion 34 in part, energization is ensured favorably.

The electrode portion 32 has a SiC phase serving as an aggregate, an oxide phase containing a Si oxide, an Al oxide, and an alkaline-earth metal oxide, and a metal phase containing metal Si and metal Al, where the proportion of metal Al relative to the total amount of metal Si and metal Al is 0.001 percent by mole or more and 20 percent by mole or less. Regarding such an electrode portion 32, the volume resistivity can be decreased as compared with that in the case where Al is not contained in the metal phase. In the electrode portion 32, the proportions of the SiC phase, the oxide phase, and the metal phase, the porosity, and the like are not specifically limited. For example, the electrode portion 32 may be provided with 15 percent by volume or more and 50 percent by volume or less of SiC phase, 2 percent by volume or more and 30 percent by volume or less of oxide phase, 25 percent by volume or more and 80 percent by volume or less of metal phase, and 1 percent by volume or more and 30 percent by volume or less of pores. In this regard, from the viewpoint that the volume resistivity of the electrode portion 32 is specified to be sufficiently lower than that of the heat generation portion 34, it is preferable that the proportion of the metal phase is high and the proportion of the pores is low. Here, regarding the volume ratio, initially, the porosity (percent by volume) is determined by an Archimedes method or mercury porosimetry, and the volume percentages of the SiC phase, the oxide phase, and the metal phase can be determined through conversion based on the composition ratio on the assumption that the remainder portion is composed of the SiC phase, the oxide phase, and the metal phase. Alternatively, as for a method different from that described above, for example, a polished surface is photographed by using a scanning electron microscope (SEM) or the like, and the resulting photograph is subjected to computer image analysis, so as to determine the volume ratio. More concretely, the SiC phase, the oxide phase, the metal phase, and the pore portion can be distinguished on the basis of the difference in contrast between the reflection electron images, so that the individual area ratios can be taken as the volume ratios. In the electrode portion 32, the proportions of the SiC phase, the oxide phase, the metal phase, and the pores may be uniform throughout the region or may not be uniform. For example, the electrode portion 32 may be formed in such a way that the metal phase tends to decrease toward the adjacent heat generation portion 34. According to this, as the region comes close to the heat generation portion 34, the volume resistivity increases and the amount of heat generation during energization increases, so that the temperature gradient between the electrode portion 32 having a small amount of heat generation and the heat generation portion 34 having a large amount of heat generation can be made gradual. Consequently, an occurrence of cracking and the like in a boundary region between the electrode portion 32 and the heat generation portion 34 can be suppressed. Furthermore, for example, the electrode portion 32 may be formed in such a way that the porosity tends to come close to the porosity of the heat generation portion 34 toward the adjacent heat generation portion 34. Accordingly, the strength gradient between the electrode portion 32 and the heat generation portion 34 becomes gradual, and an occurrence of cracking and the like in the boundary region between the electrode portion 32 and the heat generation portion 34 can be suppressed. At this time, preferably, the electrode portion 32 is formed in such a way that the porosity tends to increase toward the adjacent heat generation portion 34. This is because in the case where the electrode portion 32 is disposed at the end portion of the honeycomb structure 20, the strength of the surface of the honeycomb structure 20 tends to increase and the durability to erosion can be enhanced.

In the electrode portion 32, the oxide phase includes a Si oxide, an Al oxide, and an alkaline-earth metal oxide. In this regard, here, the alkaline-earth metal is represented by M. The Si oxide contains Si as an oxide and may be a composite oxide, e.g., a Si-Al composite oxide, a Si-M composite oxide, or a Si-Al-M composite oxide, besides SiO₂. Likewise, the Al oxide may be a composite oxide, e.g., an Al-Si composite oxide, an Al-M composite oxide, or an Al-Si-M composite oxide, besides Al₂O₃. Likewise, the alkaline-earth metal oxide may be a composite oxide, e.g., an M-Si composite oxide, a M-Al composite oxide, or an M-Si-Al composite oxide, besides an oxide represented by MₓO_{y} (x and y are integers of 1 or more). As described above, the Si oxide, the Al oxide, and the alkaline-earth metal oxide may not be distinguished clearly. In the oxide phase, it is preferable that the alkaline-earth metal contained in the alkaline-earth metal oxide is at least one type of Mg, Ca, Sr, and Ba. According to this, the oxidation resistance and the thermal shock resistance can be improved and the strength can be enhanced.

In the electrode portion 32, the metal phase includes metal Si and metal Al. Metal Si and metal Al may be present adjacently, or be present discretely. Alternatively, one of the two metals may be dissolved into the other to make a solid solution. For example, metal Al may be dissolved into metal Si to make a solid solution. Regarding this metal phase, the proportion of metal Al relative to the total amount of metal Si and metal Al is 0.001 percent by mole or more and 20 percent by mole or less. This is because if the proportion of metal Al is 0.001 percent by mole or more, the volume resistivity of the electrode portion 32 can be decreased. In addition, this is because if the proportion of metal Al is 20 percent by mole or less, degradation in the heat resistance can be further suppressed. The proportion of metal Al in this metal phase is more preferably 0.1 percent by mole or more, and further preferably 0.4 percent by mole or more because the volume resistivity of the electrode portion 32 can be further decreased. Meanwhile, the proportion of metal Al in the metal phase is more preferably 10 percent by mole or less, and further preferably 5 percent by mole or less because degradation in the heat resistance can be further suppressed.

It is preferable that the volume resistivity of the electrode portion 32 is less than or equal to one-half the volume resistivity of the heat generation portion 34. According to this, in energization heat generation of the honeycomb structure, a current can be passed without potential difference throughout the end surface (electrode portion 32) of the honeycomb structure and the whole heat generation portion can be heated uniformly. In this regard, from the viewpoint that heating can be performed more uniformly, it is favorable that the electrode portion 32 has a lower volume resistivity. The volume resistivity is preferably one-fifth or less, more preferably one-tenth or less, and further preferably one-hundredth or less. Meanwhile, from the viewpoint that the SiC phase, the oxide phase, the metal Si phase, and the pore portions are included practically, the volume resistivity of the electrode portion 32 is preferably 10⁻⁶ Ωcm or more and 10 Ωcm or less. In this range, from the viewpoint that a potential difference is not easily generated practically, 5 Ωcm or less is preferable, and 1 Ωcm or less is more preferable.

Regarding the electrode portion 32, the Young's modulus of the electrode portion 32 is preferably less than or equal to 1.4 times the Young's modulus of the heat generation portion 34. According to this, in energization heat generation of the honeycomb structure, the electrode portion 32 can also be deformed following deformation of the heat generation portion 34, so that an occurrence of internal stress along with deformation of the honeycomb structure is reduced, and occurrences of cracking and the like can be suppressed. Moreover, from the viewpoint of further reduction in occurrence of internal stress, it is more preferable that the Young's modulus of the electrode portion 32 is less than or equal to 1.2 times the Young's modulus of the heat generation portion 34. Meanwhile, the electrode portion 32 may be formed in such a way that the Young's modulus tends to come close to the Young's modulus of the heat generation portion 34 toward the adjacent heat generation portion 34. Consequently, changes in amount of deformation between the electrode portion 32 and the heat generation portion 34 becomes gradual, an occurrence of internal stress in the inside of the honeycomb structure is reduced, and occurrences of cracking and the like can be further suppressed. Moreover, regarding the electrode portion 32, the Young's modulus of the electrode portion 32 may be specified to be more than or equal to 1.0 times the Young's modulus of the heat generation portion 34.

The thus produced partition portion 22 of the honeycomb structure is allowed to carry a catalyst appropriately in accordance with the use thereof. This is because hazardous materials, e.g., HC, CO, NOx, and particulate matters (PM), contained in an exhaust gas can be removed by the catalyst. At this time, the catalyst may be carried by the partition portion of the electrode portion 32, but is preferably carried by at least the partition portion of the heat generation portion 34. This is because the temperature of the exhaust gas can be raised to a temperature suitable for cleaning with the catalyst by heat generation from the heat generation portion 34 due to energization. The catalyst can be activated at an early stage of the starting of an engine by employing such a configuration. Furthermore, regarding even automobiles having low exhaust gas temperatures, such as, hybrid cars and plug-in hybrid cars, catalysts can be activated to clean efficiently. Examples of catalysts include NOx occlusion catalysts formed from alkali metals (Li, Na, K, Cs, and the like) and alkaline-earth metals (Ca, Ba, Sr, and the like), ternary catalysts, co-catalysts typified by an oxide containing at least one of Ce and Zr, and HC (Hydro Carbon) adsorbing agents. Meanwhile, as for catalysts in the case where, for example, this honeycomb structure 20 is applied to DPE, an oxidation catalyst capable of oxidizing and burning PM can be used favorably. Examples of oxidation catalysts include noble metals, e.g., platinum (Pt), palladium (Pd) and rhodium (Rh).

Next, a method for manufacturing the honeycomb structure 20 provided with the partition portion 22 constituting a plurality of cells serving as flow paths of a fluid will be described. This method for manufacturing the honeycomb structure may include, for example, a base material production step to produce a honeycomb base material having a SiC phase and an oxide phase containing a Si oxide, a formation step to form an impregnation base material containing metal Si and metal Al and an alkaline-earth metal compound on a part of the surface of the resulting honeycomb base material, and an impregnation step to impregnate metal Si and metal Al, which are contained in the impregnation base material, into pores of the honeycomb base material by heating the honeycomb base material provided with the impregnation base material and the alkaline-earth metal compound in an inert gas atmosphere.

The honeycomb base material produced in the base material production step is provided with the SiC phase serving as an aggregate and the oxide phase containing a Si oxide. Furthermore, a metal Si phase containing metal Si may be provided. In the honeycomb base material, the proportions of the SiC phase, the oxide phase, and the metal phase, the porosity, and the like are not specifically limited. For example, the honeycomb base material may be provided with 15 percent by volume or more and 50 percent by volume or less of SiC phase, 2 percent by volume or more and 30 percent by volume or less of oxide phase, 10 percent by volume or more and 65 percent by volume or less of metal phase, and 10 percent by volume or more and 50 percent by volume or less of pores. It is preferable that the oxide phase contains an Al oxide and an alkaline-earth metal oxide, besides a Si oxide, because the oxidation resistance and the thermal shock resistance can be improved and the strength can be enhanced. In this regard, the Si oxide, the Al oxide, and the alkaline-earth metal oxide may not be distinguished clearly. For example, the Si oxide, the Al oxide, and the alkaline-earth metal oxide may be composite oxides. In this oxide phase, it is preferable that the alkaline-earth metal contained in the alkaline-earth metal oxide is at least one type of Mg, Ca, Sr, and Ba. This is because the oxidation resistance and the thermal shock resistance can be further improved and the strength can be further enhanced.

In the base material production step, materials for the honeycomb base material are mixed, and the partition portion is formed by a predetermined forming method. As for the material for the base material, for example, SiC serving as an aggregate, metal Si, an oxide, a pore-forming material, and a dispersion medium may be mixed to prepare pottery clay or slurry and be used. For example, a SiC powder, a metal Si powder, and an oxide powder are mixed at a predetermined volume ratio and are added to a dispersion medium, e.g., water, and a pore-forming material. Furthermore, an organic binder and the like are added to the resulting mixture and kneading is performed, so that plastic pottery clay can be formed. The procedure to prepare the pottery clay through kneading is not specifically limited. Examples can include a method by using a kneader, a vacuum kneading machine, or the like. As for the pore-forming material, a material which is burnt off through firing in the downstream is preferable. For example, starch, coke, resin foam, and the like can be used. As for the binder, it is preferable that organic binders of, for example, cellulose base are used.
As for the dispersion agent, surfactants, e.g., ethylene glycol, can be used. This honeycomb base material may be formed as a honeycomb compact through extrusion into any shape described above by using a mold having a shape in which cells are disposed side by side. It is preferable that the resulting honeycomb compact is subjected to a dying treatment, a calcination treatment, and a firing treatment. The calcination treatment is a treatment in which organic components contained in the honeycomb compact are removed through burning at a temperature lower than a firing temperature. The firing temperature can be specified to be 1,400°C or higher and 1,500°C or lower, and 1,430°C or higher and 1,450°C or lower is preferable. The firing atmosphere is not specifically limited, but an inert gas atmosphere is preferable, and an Ar atmosphere is more preferable. The honeycomb base material, which is a sintered body, can be obtained through the above-described steps.

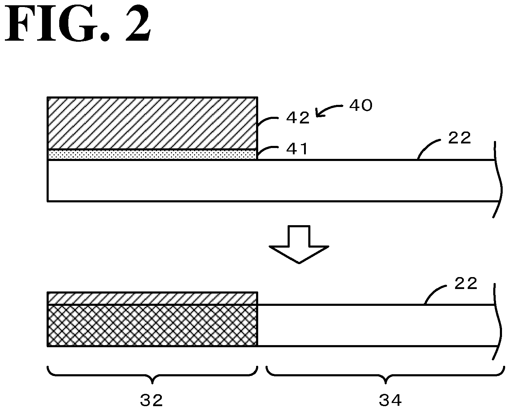

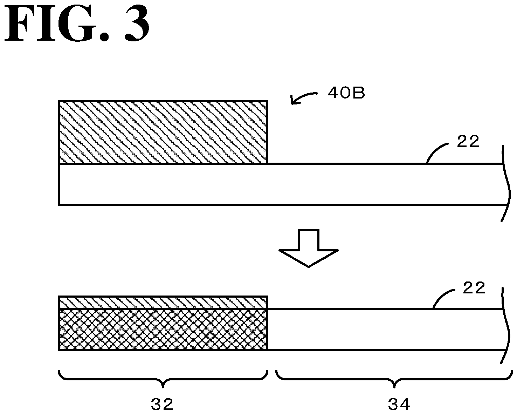

In the formation step, an impregnation base material containing metal Si and metal Al and an alkaline-earth metal compound are formed on a part of the surface of the resulting honeycomb base material. Impregnation of metal Si at normal pressure becomes possible by using metal Al and the alkaline-earth metal besides metal Si, as described above. Fig. 2 is an explanatory diagram showing an example of the formation step and the impregnation step with reference to an impregnation material layer 40, where the impregnation base material and the alkaline-earth metal compound are formed independently. Fig. 3 is an explanatory diagram showing an example of the formation step and the impregnation step with reference to an impregnation material layer 40B, where the impregnation base material and the alkaline-earth metal compound are formed integrally. That is, in formation of the impregnation base material and the alkaline-earth metal compound on a part of the surface of the honeycomb base material in this formation step, as shown in Fig. 2, the impregnation material layer 40, in which the alkaline-earth metal compound layer 41 and the impregnation base material 42 are formed independently, may be formed on the partition portion 22. Alternatively, as shown in Fig. 3, the impregnation material layer 40B, in which the alkaline-earth metal compound and the impregnation base material (metal Al, metal Si) are mixed, may be formed on the partition portion 22. In this regard, it is preferable that the impregnation material layer-forming region on the partition portion 22 is within the range of, for example, one-hundredth or more and one-fifth or less relative to the total length of the honeycomb structure 20 in the flow path direction of a fluid. This range is more suitable for an electrode.

In formation of the impregnation base material on the honeycomb base material, the impregnation base material may be used as, for example, an impregnation slurry or an impregnation paste in which a metal Si powder, a metal Al powder, and a dispersion medium including a dispersing agent are mixed. As for the dispersion medium, organic solvents, e.g., ethanol, methanol, and acetone, can be used favorably from the viewpoint that the metal powder is not oxidized. As for the dispersing agent, materials which are adsorbed by the metal powder surface and which can be dissolved into an organic solvent are preferable. For example, surfactants, e.g., alkylammonium salts, can be used. A method for forming the impregnation base material on the honeycomb base material is not specifically limited. The impregnation slurry or the impregnation paste may be applied to a part of the honeycomb base material, or a part of the honeycomb base material may be dipped into the impregnation slurry. Alternatively, the metal Si powder and the metal Al powder may be only placed on the honeycomb base material. The region of formation of the impregnation base material is not specifically limited, and formation may be performed on the surface of the partition portion 22 in the region in which formation of the electrode portion 32 is intended. Consequently, the electrode portion 32 is formed in the region provided with the impregnation base material. Concretely, for example, it is preferable that the impregnation base material is formed on the surface of one end portion of the honeycomb base material and the surface of the other end portion opposite to the one end portion. In this regard, it is more preferable that the impregnation base material is formed on the surface of the upstream side end portion of the honeycomb base material and the surface of the downstream side end portion, and it is more preferable that the impregnation base material is formed on the surface of the whole upstream side end portion of the honeycomb base material and the surface of the whole downstream side end portion. This is because if the impregnation base material is formed at end portion of the honeycomb base material, the impregnation base material is formed easily. Furthermore, this is because if the impregnation base material is formed at the whole end portion of the honeycomb base material, the impregnation base material can be formed by dipping the whole end portion into the impregnation slurry and, therefore, the impregnation base material is formed more easily. Meanwhile, after the impregnation slurry or the impregnation paste is formed, a treatment to remove an excess slurry or excess paste may be performed and, furthermore, drying may be performed. Moreover, the amount of formation of the impregnation base material may be adjusted by repeating at least any one of formation, removal, and drying a plurality of times. Regarding this impregnation base material, the proportion of metal Al relative to the total amount of metal Si and metal Al is preferably 0.001 percent by mole or more and is preferably 20 percent by mole or less. If the proportion of metal Al is 0.001 percent by mole or more, impregnation into the honeycomb base material is possible in the impregnation step in the downstream, and the volume resistivity of the resulting honeycomb structure can be decreased. In addition, if the proportion of metal Al is 20 percent by mole or less, the amount of Al having a high thermal expansion coefficient is not excessive, so that favorably, breakage and the like of the honeycomb base material due to thermal expansion of the electrode portion 32 can be further suppressed, and the high-temperature strength can be further enhanced. In this regard, 0.1 percent by mole or more is more preferable from the viewpoint of lowering of the viscosity of the metal phase in the impregnation step in the downstream and enhancement of the wettability between the SiC phase and the metal phase, and 0.4 percent by mole or more is further preferable. This is because the eutectic point of the metal phase can be lowered and, in addition, the Si oxide on the SiC phase surface can be reduced. Meanwhile, from the viewpoint that the heat resistance and the high-temperature strength of the resulting electrode portion 32 are enhanced and the thermal expansion coefficient is optimized, 10 percent by mole or less is preferable, and 5 percent by mole or less is further preferable. The impregnation base material is required to contain metal Si and metal Al, and it is more preferable to contain a metal Si powder and a metal Al powder.

The alkaline-earth metal compound is not specifically limited. Salts, e.g., carbonates, nitrates, and sulfates, are preferable, and among them, carbonates are more preferable because the impregnation base material is impregnated into the honeycomb base material easily in the impregnation step in the downstream. Meanwhile, as for the alkaline-earth metal, Mg, Ca, Sr, and Ba are preferable, and among them, Ca and Sr are more preferable. This is because the impregnation base material is impregnated into the honeycomb base material easily in the impregnation step in the downstream. The amount of the alkaline-earth metal compound is not specifically limited, but 1 percent by mass or more and 30 percent by mass or less relative to the total amount of metal Si and metal Al, which are contained in the impregnation base material, is preferable, and 5 percent by mass or more and 15 percent by mass or less is more preferable. If the amount is 1 percent by mass or more, the impregnation base material can be impregnated into the honeycomb base material in the impregnation step in the downstream, and if the amount is 30 percent by mass or less, the amount of impurities in the resulting honeycomb structure can be decreased.

In formation of the alkaline-earth metal compound on the honeycomb base material, an alkaline-earth metal compound powder may be used as an alkaline-earth metal compound slurry or an alkaline-earth metal compound paste in which the alkaline-earth metal compound and the dispersion medium including the dispersing agent are mixed. The same dispersing agent and dispersion medium as those explained with respect to the impregnation base material can be used favorably. Furthermore, the same method for forming the alkaline-earth metal compound on the honeycomb base material as the method explained with respect to the impregnation base material can be used favorably. Moreover, the same method as that described above can be employed in mixing of the alkaline-earth metal compound powder into the impregnation base material.

In the impregnation step, the honeycomb base material provided with the impregnation base material and the alkaline-earth metal compound is heated in an inert gas atmosphere, so as to impregnate metal Si and metal Al contained in the resulting impregnation base material into pores of the above-described honeycomb base material. The atmosphere of the heating is not specifically limited insofar as the inert gas atmosphere, e.g., a nitrogen atmosphere or a rare gas atmosphere, is employed. However, an Ar atmosphere at normal pressure is preferable. Here, the alkaline-earth metal compound is used and, thereby, an oxide phase is formed, so that the impregnation base material can be impregnated at normal pressure into the partition portion having low wettability. Furthermore, if normal pressure is employed, impregnation of the impregnation base material into a region outside the region provided with the impregnation base material can be suppressed. In this regard, the temperature of impregnation of the impregnation base material may be adjusted by adjusting the pressure. The heating temperature is not specifically limited insofar as the temperature is higher than or equal to the temperature at which metal Si and metal Al are melted and lower than or equal to the temperature at which the honeycomb base material is not altered. However, 1,000°C or higher and 1,500°C or lower is preferable, and 1,300°C or higher and 1,450°C or lower is more preferable.
As shown in Figs. 2 and 3, the electrode portion 32 is formed in a part of the region of the partition portion 22.

Meanwhile, in the method for manufacturing a honeycomb structure according to the present invention, the above-described steps may be executed in such a way that the Young's modulus of the electrode portion 32 becomes less
than or equal to 1.4 times the Young's modulus of the heat generation portion 34. According to this, in energization heat generation of the honeycomb structure, the electrode portion 32 can also be deformed following deformation of the heat generation portion 34, so that an occurrence of internal stress along with deformation of the honeycomb structure is reduced, and occurrences of cracking and the like can be suppressed. Regarding the method for controlling the Young's modulus, for example, control can be performed by changing the masses of the impregnation base material and the alkaline-earth metal compound appropriately. For example, the porosity is changed appropriately along with changes in masses of the impregnation base material and the alkaline-earth metal compound and, thereby, the Young's modulus can be controlled. The porosity of the electrode portion 32 may be specified to be within the range of more than 30 percent by volume and 40 percent by volume or less. As for other methods, the Young's modulus can also be controlled by, for example, lowering the firing temperature or decreasing the particle size of the raw material for the electrode portion 32 as compared with that for the heat generation portion 34.

The thus produced honeycomb structure 20 is provided with the electrode portion 32 and the heat generation portion 34, heat is generated from the heat generation portion 34 by applying a voltage from the electrode portion 32 and, thereby, the temperature of the whole honeycomb structure 20 can be raised. Consequently, for example, in the case where the honeycomb structure 20 is used as a catalyst carrier to carry a catalyst for cleaning hazardous substances contained in an exhaust gas from an engine of an automobile, the honeycomb structure 20 is disposed in an exhaust pipe on the downstream side of the engine. When the temperature of the exhaust gas from the engine does not reach the temperature at which the hazardous substances contained in the exhaust gas from the engine can be removed, the temperature of the honeycomb structure 20 can be raised by applying a voltage from the electrode portion 32, so that the exhaust gas cleaning performance can be further enhanced.

Regarding the method for manufacturing the honeycomb structure 20 according to the first embodiment described above in detail, the electrode portion 32 is formed more easily and, in addition, the volume resistivity of the electrode portion 32 can be further decreased. The reason for this is estimated as described below. In general, a Si oxide has poor wettability with metal Si, and if an oxide phase and the like, which has a larger content of Si oxides, are present in the partition portion 22 (partition base material), impregnation of the impregnation base material containing metal Si into the partition portion 22 becomes difficult. Here, metal Al is added to metal Si, followed by using as the impregnation base material. Therefore, it is believed that the wettability between SiC and Si is improved because of removal of oxides present on SiC particles and surfaces of the Si particles contained in the impregnation base material, as compared with that in the case where metal Al is not added. Meanwhile, it is believed that the impregnation base material further including the alkaline-earth metal compound has good wettability with the oxide phase and, for example, the oxide phase is entangled in melt-impregnation. Then, it is estimated that even in the case where much oxide phase is present in the partition base material, the impregnation base material containing metal Si can be impregnated at normal pressure by combining the two. Furthermore, it is estimated that metal Al is impregnated together with metal Si and, thereby, the volume resistivity of the electrode portion can be further decreased as compared with that in the case where only metal Si is impregnated. In this regard, it is believed that the relationship between phases included in the honeycomb base material and phases included in the honeycomb structure 20 is roughly as described below. That is, it is believed that the SiC phase in the honeycomb base material constitutes the SiC phase in the electrode portion 32, and metal Si and metal Al contained in the impregnation base material and the metal Si phase in the honeycomb base material constitute the metal phase in the electrode portion 32. Meanwhile, it is believed that the metal Si phase in the honeycomb base material, metal Si impregnated, metal Al impregnated, the alkaline-earth metal compound used for impregnation, and the like and the oxide phase in the honeycomb base material constitute the oxide phase in the electrode portion 32.

In this regard, it is needless to say that the present invention is not limited to the above-described first embodiment and can be executed in various aspects within the technical scope of the present invention.

For example, in the above-described first embodiment, the honeycomb structure is explained, although not limited to the honeycomb structure. Even when the honeycomb structure is not provided, it is possible to use as, for example, an energization heating element provided with an electrode portion and a heat generation portion. Moreover, in the first embodiment, the electrode portion and the heat generation portion are provided, although only the electrode portion may be provided. For example, a Si-SiC based composite material provided with a SiC phase, an oxide phase containing a Si oxide, an Al oxide, and an alkaline-earth metal oxide, and a metal phase containing metal Si and metal Al, where the proportion of metal Al relative to the total amount of metal Si and metal Al is 0.001 percent by mole or more and 20 percent by mole or less, may be prepared.

In the first embodiment, the method for manufacturing a honeycomb structure is explained, although not limited to this. For example, a porous base material may be produced in place of the honeycomb base material, and an energization heating element provided with an electrode portion and a heat generation portion may be produced by using this. Moreover, in the first embodiment, the structure provided with the electrode portion and the heat generation portion is produced, although the structure provided with only the electrode portion may be produced.
For example, a method for manufacturing a Si-SiC based composite material may be provided, the method including a formation step to form an impregnation base material containing metal Si and metal Al and an alkaline-earth metal compound on the surface of a porous base material having a SiC phase and an oxide phase containing a Si oxide and an impregnation step to impregnate metal Si and metal Al contained in the resulting impregnation base material into pores of the above-described honeycomb base material by heating the honeycomb base material provided with the above-described impregnation base material and the alkaline-earth metal compound in an inert gas atmosphere.

### [Second embodiment]

In the above-described first embodiment, the alkaline-earth metal compound and the impregnation base material are formed on the partition portion 22, and the partition portion 22 containing much oxide phase is subjected to a normal pressure impregnation treatment while the alkaline-earth metal compound is used as an impregnation auxiliary, so that the electrode portion 32 is formed as a part of the partition portion 22. In the present second embodiment, an aspect will be explained, in which after an oxide phase contained in a part of the partition portion serving as the electrode portion is removed in advance, the impregnation base material is formed on the partition portion, and the partition portion is subjected to the normal pressure impregnation treatment, so that the electrode portion is formed as a part of the partition portion. The honeycomb structure in this second embodiment is the same as the honeycomb structure in the first embodiment except that the alkaline-earth metal oxide may not be contained in the electrode portion. Therefore, the explanation of the honeycomb structure will not be provided.

Next, a method for manufacturing the honeycomb structure 20 according to the second embodiment will be described. This method for manufacturing the honeycomb structure may include, for example, a base material production step to produce a honeycomb base material which is provided with a partition portion constituting a plurality of cells serving as flow paths of a fluid and which has a SiC phase and an oxide phase containing a Si oxide, an oxide phase removal step to remove the oxide phase contained in the resulting honeycomb base material by bringing an acidic solution into contact with a part of the honeycomb base material, a formation step to form an impregnation base material containing metal Si and metal Al on a part of the surface of the honeycomb base material subjected to oxide phase removal, and an impregnation step to impregnate metal Si and metal Al, which are contained in the above-described formed impregnation base material, into pores of the honeycomb base material by heating the honeycomb base material provided with the impregnation base material in an inert gas atmosphere. The base material production step and the impregnation step are the same as those in the first embodiment. Therefore, the descriptions are omitted here.

In the oxide phase removal step, the oxide phase contained in the honeycomb base material is removed by bringing an acidic solution into contact with a part of the honeycomb base material. Metal Si has poor wettability with the oxide phase containing a Si oxide and, therefore, is not impregnated into the honeycomb base material easily. However, metal Si can be impregnated into the honeycomb base material easily by removing this oxide phase. The acidic solution is not specifically limited, insofar as the oxide phase can be removed. For example, hydrofluoric acid, sulfuric acid, hydrochloric acid, and nitric acid can be used. Among them, hydrofluoric acid can remove the Si oxide easily and, therefore, is preferable. Furthermore, hydrofluoric acid has a low rate of dissolution of other phases, e.g., metal Si, so that it is possible to suppress, for example, dissolution of necking of the SiC phase and further suppress degradation in mechanical strength. The concentration of the acidic solution, the contact method, the contact time, the contact temperature, and the like can be determined empirically. For example, in the case where hydrofluoric acid is used, the concentration is preferably 10% or more and 30% or less, and more preferably 20% or more and 25% or less. At this time, examples of the contact methods include coating and dipping, and dipping is preferable. The dipping time can be, for example, 10 minutes or more and 30 minutes or less. The dipping temperature can be, for example, 20°C or higher and 30°C or lower. After contact is completed, in order to suppress further reaction, the acidic solution is removed. The method for removing the acidic solution is not limited, but it is preferable that washing is performed with water, ethanol, acetone, or the like. Furthermore, after the washing, the honeycomb base material may be dried. The drying condition is not limited, and the drying can be performed at 100°C or higher and 150°C or lower. The region brought into contact with the acidic solution is not specifically limited, and may be a region to be provided with the electrode portion 32 of the partition portion. According to this, the electrode portion 32 can be formed in the region which has been brought into contact with the acidic solution and which is provided with the impregnation base material in the formation step in the downstream. Concretely, for example, it is preferable that one end portion of the honeycomb base material and the other end opposite to the one end portion are brought into contact with the acidic solution. Among them, it is more preferable that the upstream side end portion of the honeycomb base material and the downstream side end portion are brought into contact with the acidic solution, and it is more preferable that the whole upstream side end portion of the honeycomb base material and the whole downstream side end portion are brought into contact with the acidic solution.

In the formation step, the impregnation base material containing metal Si and metal Al is formed on the surface of the honeycomb base material subjected to oxide removal. In this regard, a difference from the formation step in the first embodiment is in the point that it is not necessary to form the alkaline-earth metal compound. The details of the impregnation base material and the method for forming the impregnation base material are the same as those in the first embodiment. Therefore, the descriptions are omitted here.

Regarding the method for manufacturing the honeycomb structure according to the second embodiment described above in detail, the impregnation base material containing metal Si can be impregnated at normal pressure into the honeycomb base material containing the SiC phase and the oxide phase containing the Si oxide. This is because it is possible that the oxide phase having poor wettability with the impregnation base material has been removed in advance, the impregnation base material is formed in the region including less oxide phase, and then the impregnation treatment is performed. Moreover, the volume resistivity of the electrode portion 32 can be further decreased as compared with that in the case where only metal Si is impregnated. The reason for this is estimated that metal Al is impregnated together with metal Si. Meanwhile, it is believed that the relationship between phases included in the honeycomb base material and phases included in the honeycomb structure 20 is roughly as described below. That is, it is believed that the SiC phase in the honeycomb base material constitutes the SiC phase in the electrode portion 32, and metal Si and metal Al contained in the impregnation base material and the metal phase in the honeycomb base material constitute the metal phase in the electrode portion 32. Moreover, it is believed that the metal Si phase in the honeycomb base material, metal Si impregnated, metal Al impregnated, and the like and the oxide phase in the honeycomb base material constitute the oxide phase in the electrode portion 32.

In this regard, it is needless to say that the present invention is not limited to the above-described second embodiment and can be executed in various aspects within the technical scope of the present invention.

For example, in the second embodiment, the honeycomb structure is explained, although not limited to the honeycomb structure. Even when the honeycomb structure is not provided, it is possible to use as, for example, an energization heating element provided with an electrode portion and a heat generation portion. Moreover, in the second embodiment, the electrode portion and the heat generation portion are provided, although only the electrode portion may be provided. For example, a Si-SiC based composite material provided with a SiC phase, an oxide phase containing a Si oxide and an Al oxide, and a metal phase, in which the proportion of metal Al relative to the total amount of metal Si and metal Al is 0.001 percent by mole or more and 20 percent by mole or less, may be prepared.

For example, in the second embodiment, the method for manufacturing a honeycomb structure is explained, although not limited to this. For example, a porous base material may be produced in place of the honeycomb base material, and an energization heating element provided with an electrode portion and a heat generation portion may be produced by using this. Moreover, in the second embodiment, the structure provided with the electrode portion and the heat generation portion is produced, although the structure provided with only the electrode portion may be produced. For example, a method for manufacturing a Si-SiC based composite material may be provided, the method including an oxide removal step to remove a Si oxide contained in the honeycomb base material having a SiC phase and an oxide phase containing a Si oxide by bringing an acidic solution into contact with the surface of a part of the above-described honeycomb base material, a formation step to form an impregnation base material containing metal Si and metal Al on the above-described honeycomb base material subjected to Si oxide removal, and an impregnation step to impregnate metal Si and metal Al contained in the above-described formed impregnation base material into pores of the above-described honeycomb base material by heating the honeycomb base material provided with the above-described impregnation base material in an inert gas atmosphere.

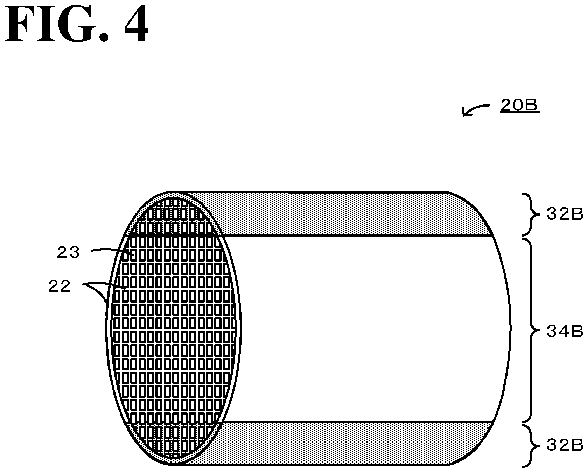

In the first embodiment and the second embodiment, the honeycomb structure 20 provided with the electrode portions 32 at the upstream end portion and the downstream end portion is explained, although not limited to this insofar as the electrode portions are disposed at one end portion of the honeycomb structure and the other end portion opposite to the one end portion, as shown in Fig. 4. Fig. 4 is an explanatory diagram schematically showing an example of the configuration of a honeycomb structure 20B. As shown in Fig. 4, a heat generation portion 34B may be disposed in the central region along cells 23, and electrode portions 32B may be disposed with this heat generation portion 34B therebetween in a region including the wall portion of the outside perimeter surface of the honeycomb structure 20B along the cells 23 in such a way as to oppose to each other. That is, the electrode portions 32B may be disposed at an upper end portion and a lower end portion (or right end portion and left end portion) of the honeycomb structure 20B. In this case, the electrode portions 32B may be disposed from the upstream side end portion to the downstream side end portion parallel to the flow path continuously or intermittently. Consequently, the honeycomb structure 20B can be heated from the upstream side to the downstream side efficiently. Meanwhile, both the opposite electrode portions 32B are disposed also in the regions excluding the upstream side end portion and, therefore, even if the partition portion at the upstream side end portion is lost because of erosion or the like, the electrode portions remain and energization can be performed sufficiently.

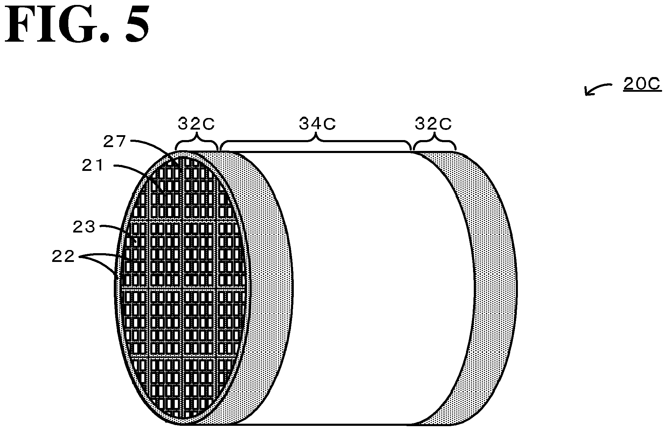

In the above-described first embodiment and second embodiment, the honeycomb structures are formed integrally. However, as shown in Fig. 5, a honeycomb structure 20C may be employed, where honeycomb segments 21 are bonded with bonding layers 27. According to this, a stress concentrated on the outside perimeter portion of the honeycomb because of thermal expansion can be relaxed.

In the above-described first embodiment and second embodiment, the honeycomb structures having a structure in which both ends of the cells 23 are opened are explained, although not specifically limited to this. For example, a so-called honeycomb filter may be provided, wherein cells, in which one end portion is opened and the other end portion is sealed with a sealing portion, and cells, in which one end portion is sealed with a sealing portion and the other end portion is opened, are arranged alternately. Furthermore, in this honeycomb filter, a collection layer, which is a layer to collect solid components (PM) contained in a fluid (exhaust gas), may be disposed. Regarding this honeycomb filter, the exhaust gas entering the cell from the inlet side is passed through the collection layer and the partition portion and is discharged from the cell on the outlet side. At this time, PM contained in the exhaust gas is collected on the collection layer. Consequently, solid components contained in the exhaust gas can be removed.

In the above-described first embodiment and second embodiment, the manufacturing methods include the base material production step, but this step may be omitted. For example, a honeycomb base material prepared in advance may be used. Furthermore, in the above-described base material production step, the honeycomb base material subjected to firing is used, although not specifically limited to this. An unfired honeycomb compact may be used. Moreover, in the above-described first embodiment and second embodiment, the oxidation treatment step is included, but this step may be omitted. In addition, in the above-described first embodiment and second embodiment, the catalyst carrying step is included, but this step may be omitted.

### [Examples]

Concrete examples of production of honeycomb structures will be described below. Initially, an experiment with respect to the possibility of impregnation of an impregnation base material containing metal Si into a honeycomb base material having an oxide phase was performed. Here, a pellet base material was produced from the same material as that for the honeycomb base material. Impregnation material layers containing various impregnation base materials were formed on the resulting pellet base materials, a cross-section of each sample after execution of the impregnation step was observed, and thereby, whether the impregnation base material was impregnated into the honeycomb base material or not was examined.

### [Experimental examples 1 to 5]

As for raw materials for a pellet base material, a SiC powder, a metal Si powder, and an oxide powder containing an alkaline-earth metal were mixed in such a way that the volume ratio became 38:22:2. Forming into the shape of pellets was performed and firing was performed at 1,430°C for 3 hours in an Ar atmosphere at normal pressure. An impregnation base material produced by press-forming a metal Si powder into the shape of pellets was placed on an upper portion of the resulting pellet base material, an impregnation treatment was performed again at 1,430°C for 3 hours in an Ar atmosphere at normal pressure, and this was taken as Experimental example 1. Furthermore, as for Experimental example 2, production of a pellet base material and an impregnation treatment were performed under the same conditions as in Experimental example 1 except that the impregnation base material was produced by mixing a metal Si powder and a metal Al powder at a molar ratio of 80:20 and performing press-forming. Furthermore, as for Experimental example 3, production of a pellet base material and an impregnation treatment were performed under the same conditions as in Experimental example 2 except that 13.5 percent by mass of calcium carbonate relative to a mixed powder produced by mixing a metal Si powder and a metal Al powder at a molar ratio of 80:20 was placed between the pellet base material and the impregnation base material. Furthermore, as for Experimental example 4, a pellet base material was produced as in Experimental example 1 and an impregnation treatment was performed as in Experimental example 1 except that the pellet base material was used after being dipped at ambient temperature and normal pressure for 20 minutes into a hydrofluoric acid solution (HF solution) adjusted to have a concentration of 23%, being washed with distilled water, ethanol, and acetone, each three times, and being dried at 120°C for 3 hours. Furthermore, as for Experimental example 5, the pellet base material subjected to the oxide phase removal with the HF solution as in Experimental example 4 was used and an impregnation treatment was performed as in Experimental example 1 except that the impregnation base material produced by press-forming a metal Si powder and a metal Al powder, as in Experimental example 2, was used.

### (Observation result)

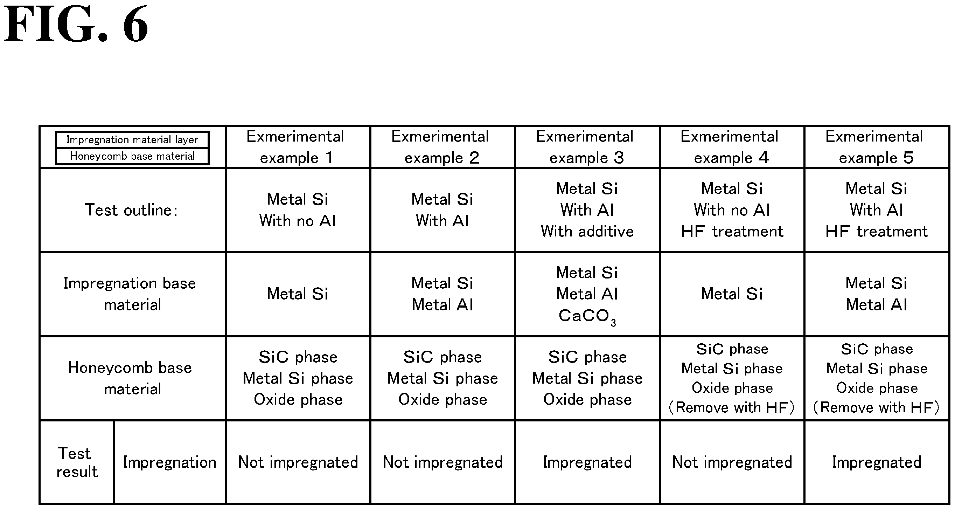

Fig. 6 is an explanatory diagram collectively showing the test condition of each experimental example and results after an impregnation treatment. After each experimental example was subjected to the impregnation treatment, a cross-section thereof was observed and, thereby, whether the impregnation base material was impregnated into pores of the pellet base material or not was visually determined. As a result, as shown in Fig. 6, it was found that even when metal Al was added to metal Si, impregnation was not able to be performed. On the other hand, it was found that when metal Al was added to the impregnation base material and, in addition, a CaCO₃ powder was added, impregnation was able to be performed regarding even the pellet base material provided with much oxide phase. Furthermore, it was found that regarding even Experimental example 4, in which the oxide phase (mainly, oxidized Si) was removed by the HF treatment, impregnation did not occur easily by only metal Si. On the other hand, it was found that regarding Experimental example 5, in which the oxide phase was removed by the HF treatment and, in addition, metal Al was added to the impregnation base material, impregnation was able to be performed. Therefore, it was found that metal Si was able to be impregnated into the honeycomb base material of SiC by adding metal Al to the impregnation base material containing metal Si and using an additive of alkaline-earth metal compound or performing the acid treatment to remove the oxide phase.

### (SEM observation)

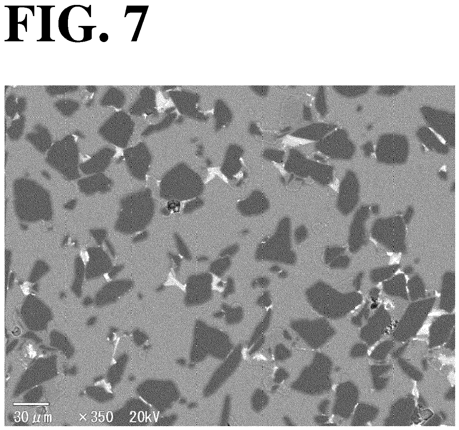

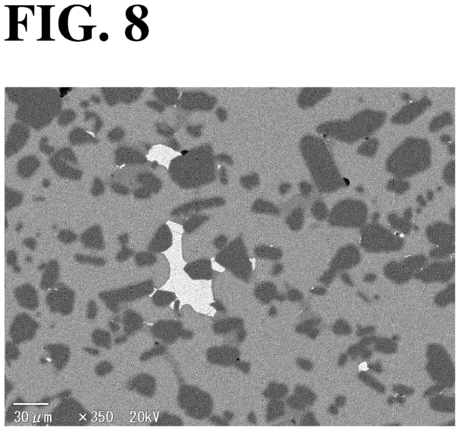

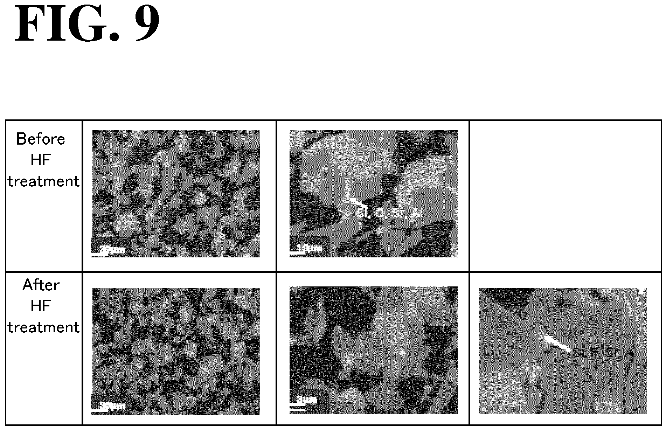

Regarding the resulting pellet base material, a reflection electron image was photographed by using an electron microscope (JSM-5410 produced by JEOL LTD.). In observation of this reflection electron image, the SiC phase looked dark gray, the metal phase looked light gray, and a pore looked black. In this regard, sometimes, the oxide phase looked gray darker than the SiC phase or gray lighter than the metal phase depending on the composition of elements contained. Fig. 7 is a reflection electron image of a cross-section of the pellet base material obtained in Experimental example 3. As is clear from Fig. 7, the metal phase was melt-impregnated into the porous base material, and was almost densely embedded. Fig. 8 is a reflection electron image of a cross-section of the pellet base material obtained in Experimental example 5. As is clear from Fig. 8, the metal phase was melt-impregnated into the porous base material, and was almost densely embedded in the same manner as in Experimental example 3. Meanwhile, Fig. 9 shows reflection electron images of a cross-section of a pellet base material before and after a hydrogen fluoride treatment in Experimental example 5. As is clear from Fig. 9, oxides were decreased by the hydrogen fluoride treatment. In consideration of the above-described results, impregnation of the impregnation base material into the honeycomb structure was examined below.

### (1) Production of honeycomb structure by using alkaline-earth metal compound

### [Example 1]

### (Production of honeycomb base material)

As for raw materials for a honeycomb base material, a SiC powder, a metal Si powder, and an oxide powder containing an alkaline-earth metal were mixed in such a way that the volume ratio became 38:22:2. Then, a honeycombshaped compact was produced and firing was performed at 1,430°C for 3 hours in an Ar atmosphere at normal pressure. In this manner, a honeycomb base material was obtained, wherein the partition thickness was 100 µm, the cell density was 62 cells/cm² (400 cpsi), the diameter was 100 mm, and the length was 100 mm. Regarding this honeycomb base material, the volume resistivity of the central portion was 117 Ωcm, and the porosity of the partition portion was 38 percent by volume.

### (Formation of impregnation base material and alkaline-earth metal compound)

Formation of an impregnation base material and an alkaline-earth metal compound was performed as described below. Initially, an impregnation slurry containing the impregnation base material and the alkaline-earth metal compound was prepared as described below. A metal Si powder (average particle diameter 2 µm) and a metal Al powder (average particle diameter 1 µm) were mixed at a molar ratio of 80:20, so as to obtain a mixed powder. Then, 1.0 percent by weight of dispersing agent (alkylammonium salt) relative to ethanol serving as a dispersion medium was added to the ethanol, and 20 percent by mass of mixed powder relative to the ethanol and 13.5 percent by mass of calcium carbonate relative to the mixed powder were further added, so as to prepare the impregnation slurry containing the impregnation base material and the alkaline-earth metal compound. Subsequently, the honeycomb base material produced as described above was dipped into the resulting impregnation slurry at ambient temperature and normal pressure for 10 seconds. Furthermore, an excess slurry on the honeycomb base material surface was blown off with air and, thereafter, drying was performed at 120°C for 3 hours in the air atmosphere. Then, the treatment from dipping to drying was repeated until a target weight of impregnation base material was formed on the honeycomb base material, so that the impregnation base material was formed on the honeycomb base material surface. Here, the target weight may be the amount enough for ensuring the desired volume resistivity of the electrode portion. However, from the viewpoint of impregnation into pores, the value calculated from a maximum amount of impregnation calculated from the pore volume was employed.

### (Impregnation treatment)

The impregnation treatment was performed by firing the honeycomb base material provided with the impregnation base material and the alkaline-earth metal compound, as shown in Fig. 2, at 1,450°C for 4 hours in an Ar atmosphere at normal pressure. In this manner, a honeycomb structure in Example 1 was obtained.

### [Examples 2 and 3]

A honeycomb structure in Example 2 was obtained through the same steps as in Example 1 except that the impregnation slurry was prepared by using a mixed powder, in which the metal Si powder and the metal Al powder were mixed at a molar ratio of 95:5, as the impregnation base material. Furthermore, a honeycomb structure in Example 3 was obtained through the same steps as in Example 1 except that the impregnation slurry was prepared by using a mixed powder, in which the metal Si powder and the metal Al powder were mixed at a molar ratio of 99.6:0.4, as the impregnation base material.

### [Examples 4 and 5]

A honeycomb structure in Example 4 was obtained through the same steps as in Example 1 except that in formation of the impregnation base material and the alkaline-earth metal compound, the weights of the impregnation base material and the alkaline-earth metal compound were specified in such a way as to make the porosity of the partition portion 24 percent by volume in the impregnation treatment in the downstream. Furthermore, a honeycomb structure in Example 5 was obtained through the same steps as in Example 1 except that in formation of the impregnation base material and the alkaline-earth metal compound, the weights of the impregnation base material and the alkaline-earth metal compound were specified in such a way as to make the porosity of the partition portion 30 percent by volume in the impregnation treatment in the downstream.

### [Examples 9 to 13]

Furthermore, a honeycomb structure by using the alkaline-earth metal compound was produced. A honeycombshaped compact was produced under the same conditions as in Example 1 except that as for raw materials for the honeycomb base material, a SiC powder, a metal Si powder, and an oxide powder containing an alkaline-earth metal were mixed at a volume ratio of 34:26:2 and a mixture of metal Si powders having different particle diameters (average particle diameters of 2 µm, 6 µm, and 12 µm) was used. Moreover, the same steps as in Example 1 were performed except that as for raw materials for the impregnation base material, the metal Si powder and the metal Al powder were mixed at a molar ratio of 95:5, the impregnation slurry including ethanol serving as the dispersion medium was used, and the masses of the impregnation base material and the alkaline-earth metal compound were changed. The resulting honeycomb structures were taken as Examples 9 to 13.

### (2) Production of honeycomb structure by using acid treatment

### [Example 6]

### (Production of honeycomb base material)

A honeycomb base material was produced in the same manner as that in Example 1.

### (Hydrogen fluoride treatment)

A hydrogen fluoride treatment (hereafter may be referred to as HF treatment) was performed as described below. Initially, a HF solution adjusted to have a concentration of 23% was prepared. Subsequently, the porous structure obtained as described above was dipped at ambient temperature and normal pressure for 20 minutes into the HF solution. Then, the porous structure was taken out of the HF solution, was washed with distilled water three times, was washed with ethanol three times, and was washed with acetone three times. The resulting porous structure was dried at 120°C for 3 hours in the air atmosphere.

### (Formation of impregnation base material)

Formation of the impregnation base material was performed as described below. Initially, an impregnation slurry containing the impregnation base material was prepared as described below. A metal Si powder (average particle diameter 2 µm) and a metal Al powder (average particle diameter 1 µm) were mixed at a molar ratio of 80:20, so as to obtain a mixed powder. Then, 1.0 percent by weight of dispersing agent (alkylammonium salt) relative to ethanol serving as a dispersion medium was added to the ethanol, and 20 percent by mass of mixed powder relative to the ethanol was further added, so as to prepare the impregnation slurry containing the impregnation base material. Subsequently, the honeycomb base material produced as described above was dipped into the resulting impregnation slurry at ambient temperature and normal pressure for 10 seconds. Furthermore, an excess slurry on the honeycomb base material surface was blown off with air and, thereafter, drying was performed at 120°C for 3 hours in the air atmosphere. Then, the treatment from dipping to drying was repeated until a predetermined weight of impregnation base material was formed on the honeycomb base material, so that the impregnation base material was formed on the honeycomb base material surface. Here, the predetermined weight may be the amount enough for ensuring the desired volume resistivity of the electrode portion. However, from the viewpoint of impregnation into pores, the value calculated from a maximum amount of impregnation calculated from the pore volume was employed.

### (Impregnation treatment)

The impregnation treatment was performed by firing the honeycomb base material provided with the impregnation base material at 1,450°C for 4 hours in an Ar atmosphere at normal pressure. In this manner, a honeycomb structure in Example 6 was obtained.

### [Examples 7 and 8]

A honeycomb structure in Example 7 was obtained through the same steps as in Example 6 except that the impregnation slurry was prepared by using a mixed powder, in which the metal Si powder and the metal Al powder were mixed at a molar ratio of 95:5, as the impregnation base material. Furthermore, a honeycomb structure in Example 8 was obtained through the same steps as in Example 6 except that the impregnation slurry was prepared by using a mixed powder, in which the metal Si powder and the metal Al powder were mixed at a molar ratio of 99.6:0.4, as the impregnation base material.

### (4) Production of honeycomb structure in comparative example

### [Comparative example 1]

A honeycomb structure in Comparative example 1 was obtained through the same steps as in Example 1 except that formation of the impregnation slurry and the alkaline-earth metal compound and the impregnation treatment were not performed.

### [Comparative example 2]

A structure in Comparative example 2 was obtained through the same steps as in Comparative example 1 except that in order to increase the proportion of metal Si constituting the honeycomb base material, the mixed raw material was obtained by mixing the SiC powder, the metal Si powder, and the oxide powder containing the alkaline-earth metal at a volume ratio of 34:26:2.

### [Comparative example 3]

A structure in Comparative example 3 was obtained through the same steps as in Example 1 except that calcium carbonate was not added.

### [Comparative example 4]

A structure in Comparative example 4 was obtained through the same steps as in Comparative example 1 except that as for raw materials for the honeycomb base material, the SiC powder, the metal Si powder, and the oxide powder containing the alkaline-earth metal were mixed at a volume ratio of 34:26:2 and a mixture of metal Si powders having different particle diameters (average particle diameters of 2 µm, 6 µm, and 12 µm) was used.

### (4) Measurement of porosity

The porosity was measured by mercury porosimetry through the use of a mercury porosimeter (PoreMaster produced by Quantachrome Instruments).

### (5) Measurement of volume resistivity

The volume resistivity was measured as described below. Initially, a rectangular parallelepiped test piece of three cells (rib thickness 0.01 cm, the number of ribs 4) was cut from the honeycomb structure produced. A Pt paste was applied to both end surfaces of this test piece, wiring was performed with Pt lines, so as to connect to a voltage source current measuring device, and a voltage was applied in the flow path direction by a direct-current four-terminal method. The measurement results were used, and calculation was performed on the basis of a formula, volume resistivity (Ωcm) = resistivity x 0.01 x 4 x a/b, where the sample height was represented by a and the electrode distance was represented by b.

### (6) Result and discussion

Table 1 shows the experimental results of Examples 1 to 13 and Comparative examples 1 to 4. Regarding Examples 1 to 5 and 9 to 13, in which the alkaline-earth metal compound was formed together with the impregnation base material, and Examples 6 to 8, in which the hydrogen fluoride treatment was performed, the porosities decreased as compared with that of the base material. From these results, it was found that the impregnation base material containing metal Si was able to be impregnated by either using the alkaline-earth metal compound or performing the hydrogen fluoride treatment. Furthermore, regarding all Examples, the volume resistivities were 10 Ωcm or less and, in particular, regarding Examples 1 to 8, the volume resistivities were a low 1 Ωcm or less. Therefore, the volume resistivities were less than or equal to one-half the volume resistivities in Comparative examples, which are believed to exhibit volume resistivities nearly equal to those of the base materials.
In particular, regarding Examples 1 to 8, the volume resistivities were less than or equal to one-hundredth the volume resistivities in Comparative examples. From these results, it was found that the volume resistivity was able to be decreased by impregnating the impregnation base material. Moreover, although details are omitted, regarding the volume resistivities in Examples 1 to 5, in which the porous base material not in the honeycomb shape, but in the pellet shape was used, nearly the same results were obtained. Consequently, it is estimated that the present invention can be applied to not only the honeycomb-shape type, but also various types. Furthermore, it is estimated that the same effects are obtained in the case where the hydrogen fluoride treatment is performed and, in addition, the alkaline-earth metal compound is formed together with the impregnation base material.

**[Table 1]**

| | Honeycomb base material | | | | | Impregnation base material | | Alkaline earth metal | Result | |
|---|---|---|---|---|---|---|---|---|---|---|
| | HF treatment | Si | SiC | Oxide | Porosity | Si | Al | CaCO₃ | Porosity | Volume resistivity |
| | | vol% | vol% | vol% | vol% | percent by mole | percent by mole | wt% | vol% | Ωcm |
| Example 1 | Not performed | 22 | 38 | 2 | 38 | 80 | 20 | 13 5 | 1 | 002 |
| Example 2 | Not performed | 22 | 38 | 2 | 38 | 95 | 5 | 13 5 | 1 | 0 19 |
| Example 3 | Not performed | 22 | 38 | 2 | 38 | 99 6 | 0 4 | 13 5 | 1 | 035 |
| Example 4 | Not performed | 22 | 38 | 2 | 38 | 80 | 20 | 13 5 | 24 | 0 70 |
| Example 5 | Not performed | 22 | 38 | 2 | 38 | 80 | 20 | 13 5 | 30 | 0 50 |
| Example 6 | Performed | 22 | 38 | 2 | 38 | 80 | 20 | 0 | 1 | 0002 |
| Example 7 | Performed | 22 | 38 | 2 | 38 | 95 | 5 | 0 | 1 | 0023 |
| Example 8 | Performed | 22 | 38 | 2 | 38 | 99 6 | 0 4 | 0 | 1 | 035 |
| Example 9 | Not performed | 26 | 34 | 2 | 38 | 95 | 5 | 13 5 | 30 | 11 |
| Example 10 | Not performed | 26 | 34 | 2 | 38 | 95 | 5 | 13 5 | 33 | 1 4 |
| Example 11 | Not performed | 26 | 34 | 2 | 38 | 95 | 5 | 13 5 | 34 | 1 7 |
| Example 12 | Not performed | 26 | 34 | 2 | 38 | 95 | 5 | 13 5 | 35 | 3 0 |
| Example 13 | Not performed | 26 | 34 | 2 | 38 | 95 | 5 | 13 5 | 37 | 7 0 |
| Comparative Example 1 | - | 22 | 38 | 2 | 38 | 0 | 0 | 0 | 38 | 117 |
| Comparative Example 2 | - | 26 | 34 | 2 | 38 | 0 | 0 | 0 | 38 | 70 |
| Comparative Example 3 | Not performed | 22 | 38 | 2 | 38 | 80 | 20 | 0 | Not impregnated | Not measured |
| Comparative Example 4 | - | 26 | 34 | 2 | 38 | 0 | 0 | 0 | 38 | 15 |

### (Energization test)

Next, several kW of direct-current power supply was connected to the electrode portion of the honeycomb structure produced, energization was performed to effect heat generation of the heat generation portion, and presence or absence of irregularities in the honeycomb structure was observed.

### [Examples 14 to 17, Comparative example 5]

Honeycomb structures were produced in such a way that the ratio of the Young's modulus of the electrode portion to the Young's modulus of the heat generation portion became 1.05, 1.14, 1.20, 1.24, and 1.42, respectively, and were taken as Examples 14 to 17 and Comparative example 5, respectively. The manufacturing method was the same as the steps in Example 1 except that the volume ratio of raw materials and the firing temperature of the honeycomb base material, the metal powder particle diameters and the blend ratio of the impregnation base material, and the impregnation treatment temperature, were changed respectively in order to change the Young's modulus. The raw material ratios of the honeycomb base material were changed respectively in such a way that the SiC phase became within the range of 15 percent by volume or more and 50 percent by volume or less, the oxide phase became within the range of 2 percent by volume or more and 30 percent by volume or less, the metal phase became within the range of 10 percent by volume or more and 65 percent by volume or less, and pores became within the range of 10 percent by volume or more and 50 percent by volume or less. Furthermore, the firing temperature was changed within the range of 1,400°C to 1,500°C. The average particle diameters of the metal powders in the impregnation base material were changed within the range of 0.1 µm to 10 µm. Moreover, the molar ratio of the metal Si powder to the metal Al powder was changed within the range of 80:20 to 95:5. The impregnation treatment temperature was changed within the range of 1,300°C to 1,450°C.

Table 2 shows the experimental results of Examples 14 to 17 and Comparative example 5. Regarding Comparative example 5, in which the ratio of the Young's modulus of the electrode portion to the Young's modulus of the heat generation portion exceeded 1.4 times in the energization test by using 2 kW of direct-current power supply, cracking occurred in the honeycomb structure. On the other hand, regarding Examples 14 to 17, in which the ratios of the Young's modulus of the electrode portion to the Young's modulus of the heat generation portion were less than or equal to 1.4 times, cracking did not occur. Meanwhile, in the energization test by using 3 kW of direct-current power supply having a large amount of heat generation, regarding Comparative example 5 and Example 17, in which the ratios of the Young's modulus of the electrode portion to the Young's modulus of the heat generation portion exceeded 1.2 times, cracking occurred in the honeycomb structures. On the other hand, regarding Examples 14 to 16, in which the ratios of the Young's modulus of the electrode portion to the Young's modulus of the heat generation portion were less than or equal to 1.2 times, cracking did not occur. Consequently, it was found that the ratio of the Young's modulus of the electrode portion to the Young's modulus of the heat generation portion was preferably 1.40 or less, and more preferably 1.20 or less. It was estimated that as the Young's modulus of the electrode portion became smaller, the electrode portion was able to be deformed following deformation of the heat generation portion along with heat generation and, thereby, an occurrence of internal stress along with deformation of the honeycomb structure was reduced, and occurrences of cracking and the like were able to be suppressed.

**[Table 2]**

| | Ratio of Young's modulus of electrode portion to Young's modulus of heat generation portion | Occurrence of cracking | |
|---|---|---|---|
| | | 2kW | 3kW |
| Example 14 | 1.05 | O | O |
| Example 15 | 1.14 | O | O |
| Example 16 | 1.20 | O | O |
| Example 17 | 1.24 | O | × |
| Comparative Example 5 | 1.42 | × | × |

### Industrial Applicability

The present invention can be used favorably as, for example, a honeycomb structure to clean an exhaust gas discharged from an automobile engine, a stationary engine for construction machinery or industry, a burning appliance, or the like.

## Claims

1. A honeycomb structure provided with a partition portion constituting a plurality of cells serving as flow paths of a fluid, comprising:
electrode portions which are disposed as parts of the partition portion and which have a SiC phase, an oxide phase containing a Si oxide, an Al oxide, and an alkaline-earth metal oxide, and a metal phase containing metal Si and metal Al, where the proportion of metal Al relative to the total amount of metal Si and metal Al is 0.001 percent by mole or more and 20 percent by mole or less; and
a heat generation portion which is a part of the partition portion and which has a volume resistivity higher than that of the electrode portion.

2. The honeycomb structure according to Claim 1,
wherein the electrode portions are disposed at one end portion of the honeycomb structure and the other end portion opposite to the one end portion.

3. The honeycomb structure according to Claim 1 or Claim 2, wherein the electrode portions are disposed at an upstream side end portion of the honeycomb structure and a downstream side end portion.

4. The honeycomb structure according to any one of Claims 1 to 3, wherein the electrode portions are adjacent to the heat generation portion and which are disposed in such a way that the metal phase tends to decrease toward the heat generation portion.

5. The honeycomb structure according to any one of Claims 1 to 4, wherein the volume resistivity of the electrode portion is less than or equal to one-half the volume resistivity of the heat generation portion.

6. The honeycomb structure according to any one of Claims 1 to 5, wherein the Young's modulus of the electrode portion is less than or equal to 1.4 times the Young's modulus of the heat generation portion.

7. A method for manufacturing a honeycomb structure, comprising the steps of:
forming an impregnation base material containing metal Si and metal Al and an alkaline-earth metal compound on a part of a surface of a honeycomb base material which is provided with a partition portion constituting a plurality of cells serving as flow paths of a fluid and which has a SiC phase and an oxide phase containing a Si oxide; and
impregnating metal Si and metal Al, which are contained in the resulting impregnation base material, into pores of the honeycomb base material by heating the honeycomb base material provided with the impregnation base material and
the alkaline-earth metal compound in an inert gas atmosphere.

8. The method for manufacturing a honeycomb structure according to Claim 7, wherein in the impregnation base material, the proportion of metal Al relative to the total amount of metal Si and metal Al is 0.001 percent by mole or more and 20 percent by mole or less.

9. The method for manufacturing a honeycomb structure according to Claim 7 or Claim 8, wherein the honeycomb base material is a sintered body.

10. The method for manufacturing a honeycomb structure according to any one of Claims 7 to 9, wherein in the impregnating, the honeycomb base material provided with the impregnation base material and the alkaline-earth metal compound is heated at a temperature of 1,000°C or higher and 1,500°C or lower.

11. The method for manufacturing a honeycomb structure according to any one of Claims 7 to 10, wherein in the forming, the impregnation base material and the alkaline-earth metal compound are formed on the surface of one end portion of the honeycomb base material and the surface of the other end portion opposite to the one end portion.

12. The method for manufacturing a honeycomb structure according to any one of Claims 7 to 11, wherein in the forming, the impregnation base material and the alkaline-earth metal compound are formed on the surface of the upstream side end portion of the honeycomb base material and on the surface of the downstream side end portion.

13. The method for manufacturing a honeycomb structure according to any one of Claims 7 to 12, wherein in the forming, the impregnation base material and the alkaline-earth metal compound are formed after mixing.

14. The method for manufacturing a honeycomb structure according to any one of Claims 7 to 12, wherein in the forming, the alkaline-earth metal compound is formed and, thereafter, the impregnation base material is formed.

15. The method for manufacturing a honeycomb structure according to any one of Claims 7 to 14, wherein the alkaline-earth metal compound comprises a compound of at least one of Ca and Sr.

16. The method for manufacturing a honeycomb structure according to any one of Claims 7 to 15, wherein in the forming, a compound of 1 percent by mass or more and 30 percent by mass or less of alkaline-earth metal relative to the total amount of metal Si and metal Al, which are contained in the impregnation base material, is formed.
